# EUROPEAN PATENT SPECIFICATION

(11) **EP 4 553 342 B1**
(45) Date of publication and mention of the grant of the patent: **04.02.2026**
(21) Application number: 24207512.5
(22) Date of filing: 18.10.2024
(51) Int. Cl.: F16H 7/08

(54) **HYDRAULIC TENSIONER, INTERNAL COMBUSTION ENGINE, AND STRADDLED VEHICLE**
HYDRAULISCHER SPANNER, VERBRENNUNGSMOTOR UND GRÄTSCHSITZFAHRZEUG
TENDEUR HYDRAULIQUE, MOTEUR À COMBUSTION INTERNE ET VÉHICULE À ENFOURCHER

(30) Priority: 13.11.2023 JP 2023192773
(43) Date of publication of application: 14.05.2025
(73) Proprietor: Yamaha Hatsudoki Kabushiki Kaisha, Iwata-shi, Shizuoka 438-8501 (JP)
(72) Inventor: Hashimoto, Hideaki, Iwata-shi, Shizuoka, 4388501 (JP); Yamamoto, Kensuke, Iwata-shi, Shizuoka, 4388501 (JP); Miyabe, Hiro, Iwata-shi, Shizuoka, 4388501 (JP)
(74) Representative: Grünecker Patent- und Rechtsanwälte PartG mbB

(56) References cited:
- DE-B4- 102008 026 328
- US-B2- 7 070 528
- US-B2- 7 927 242

## Description

The present invention relates to a hydraulic tensioner according to the preamble of independent claim 1, an internal combustion engine, and a straddled vehicle. Such a hydraulic tensioner can be taken from the prior art document DE 10 2008 026328 B4.

Internal combustion engines have been known in the art that have a tensioner that applies tension on a cam chain by pressing the cam chain. Examples of the tensioner include mechanical tensioners. A mechanical tensioner is disclosed in JP 2020-148132 A, for example.

The tensioner disclosed in JP 2020-148132 A includes a first shaft including a first threaded portion, a second shaft including a second threaded portion screwed to the first threaded portion, and a spring that applies a rotational force to the first shaft. The second shaft moves in the axial direction in response to the rotation of the first shaft, causing the second shaft to press the cam chain via the pressing member, thereby applying tension on the cam chain.

Tensioners known in the art include hydraulic tensioners. Hydraulic tensioners are generally superior to mechanical tensioners in terms of noise suppression and durability. Hydraulic tensioners are required to desirably perform both air venting from the hydraulic chamber and oil filling into the hydraulic chamber. If these are not performed desirably, there is a risk that the pressing force of the tensioner will be insufficient (i.e., the tensioner will not be sufficiently engaged with the cam chain). Insufficient pressing force of the tensioner can cause mechanical noise due to deteriorated behavior of the cam chain.

It is an object of the present invention to provide a hydraulic tensioner capable of desirably performing both air venting from the hydraulic chamber and oil filling into the hydraulic chamber. According to the present invention said object is solved by a hydraulic tensioner having the features of independent claim 1. Preferred embodiments are laid down in the dependent claims.

The present specification discloses a hydraulic tensioner, an internal combustion engine, and a straddled vehicle as set forth in the appended claims.

### BRIEF DESCRIPTION OF THE DRAWINGS

FIG. 1 is a left side view schematically showing a motorcycle 100.
FIG. 2A is a left side view showing an engine 1 of the motorcycle 100 and its vicinity.
FIG. 2B is a top view showing the engine 1 and its vicinity.
FIG. 3 is a view showing the interior of the engine 1.
FIG. 4 is a top view schematically showing a tensioner 20.
FIG. 5 is a cross-sectional view schematically showing the tensioner 20, showing a cross-section taken along line 5A-5A' of FIG. 4.
FIG. 6 is a cross-sectional view schematically showing the tensioner 20, showing a cross-section taken along line 6A-6A' of FIG. 4.
FIG. 7 is a perspective view schematically showing the tensioner 20, with the tensioner 20 being partially cut out.
FIG. 8 is a perspective view of a tensioner cap 26 as viewed from the reverse side.
FIG. 9 is a top view schematically showing the tensioner 20.
FIG. 10 is a top view schematically showing the tensioner 20, showing another example of the configuration of the tensioner 20.
FIG. 11 is a cross-sectional view taken along line 11A-11A' of FIG. 10.
FIG. 12 is a top view schematically showing the tensioner 20, showing yet another example of the configuration of the tensioner 20.
FIG. 13 is a view showing a cross section taken along line 13A-13A' of FIG. 12.

### DETAILED DESCRIPTION

A straddled vehicle according to a preferred embodiment will now be described with reference to the drawings. A straddled vehicle is a vehicle that is straddled by a passenger. In the following description, a motorcycle will be illustrated as the straddled vehicle according to the preferred embodiment. The type of motorcycle is not limited in any way and can be any of the so-called scooter type, moped type, off-road type, on-road type, etc. The straddled vehicle according to the present teaching is not limited to a motorcycle, but may also be an ATV (All Terrain Vehicle), a four-wheeled buggy, etc.

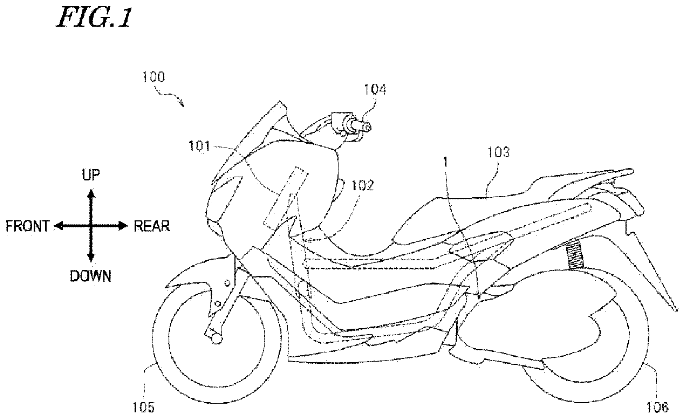

Referring to FIG. 1, the general configuration of a motorcycle 100 of the present embodiment will be described. FIG. 1 is a left side view schematically showing the motorcycle 100. The terms front, rear, left, right, up and down, as used in the description below, refer to these directions as seen from a virtual passenger seated on a seat of the motorcycle 100. The terms up and down refer to these directions in the vertical direction while the motorcycle 100 is stationary on a horizontal plane. These directions are used also when describing the various parts of the engine. Thus, front, rear, left, right, up and down in the engine refer to these directions with the engine installed on the motorcycle 100.

As shown in FIG. 1, the motorcycle 100 includes a vehicle body frame 102 including a head pipe 101, a seat 103 supported on the vehicle body frame 102, an engine (internal combustion engine) 1 supported on the vehicle body frame 102, a steering handle 104 pivotably supported on the head pipe 101, a front wheel 105, and a rear wheel 106 driven by the engine 1.

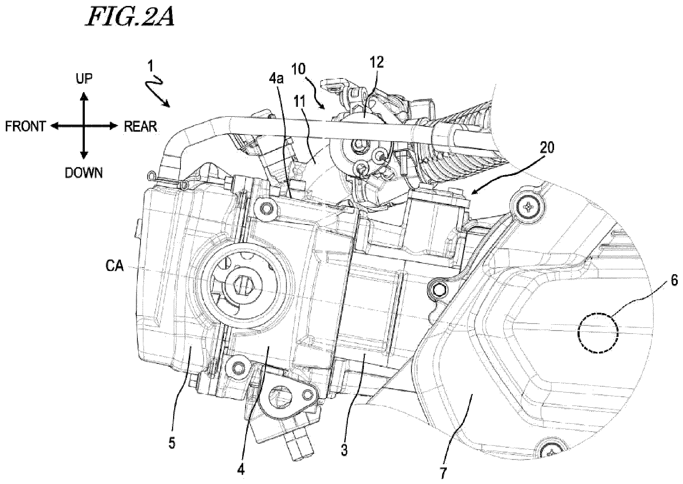

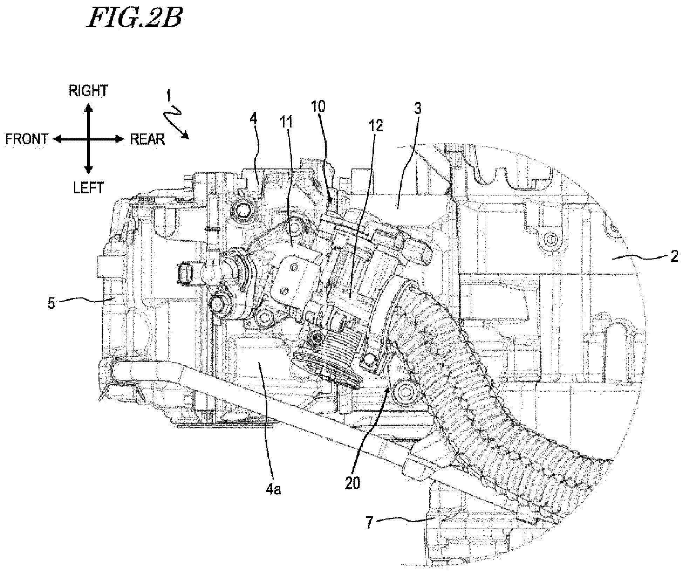

Referring to FIG. 2A and FIG. 2B, the configuration of the engine 1 will be described. FIG. 2A and FIG. 2B are a left side view and a top view, respectively, showing the engine 1 and its vicinity. Note that the terms front, rear, left, right, up and down, as used in FIG. 2A and FIG. 2B, refer to these directions with the engine 1 installed on the motorcycle 100.

The engine 1 is a 4-stroke water-cooled engine. The engine 1 includes a crankcase 2, a cylinder body 3, a cylinder head 4, and a cylinder head cover 5, as shown in FIG. 2A and FIG. 2B.

The crankcase 2 houses a crank shaft 6. The crank shaft 6 extends in the left-right direction. To the left of the crankcase 2 is arranged a transmission case 7 that houses a transmission (e.g., CVT (Continuously Variable Transmission)).

The cylinder body 3 is arranged forward of the crankcase 2. The cylinder body 3 is coupled to the front portion of the crankcase 2.

The cylinder head 4 is arranged forward of the cylinder body 3. The cylinder head 4 is coupled to the front portion of the cylinder body 3.

The cylinder head cover 5 is arranged forward of the cylinder head 4. The cylinder head cover 5 is coupled to the front portion of the cylinder head 4.

A dynamic valve mechanism (not shown in FIG. 2) including an intake valve, an exhaust valve, a cam shaft, etc., is provided in the cylinder head 4 and the cylinder head cover 5.

A cylinder (not shown) is formed inside the cylinder body 3. The cylinder extends along the cylinder axis CA. The cylinder axis CA is significantly tilted forward relative to the vertical direction (the up-down direction). In other words, the cylinder extends forward from the crankcase 2. Note that "forward" is herein used in a broad sense and includes both the case where the cylinder extends forward along the horizontal direction and the case where the cylinder is inclined from the horizontal direction. Note that the engine 1 herein is a single-cylinder engine having one cylinder, but may also be a multi-cylinder engine having multiple cylinders.

The cylinder houses a piston (not shown), which is linked to the crank shaft 6 via a connecting rod (not shown). Note that the cylinder body 3 and the crankcase 2 may be formed separately or may be formed as a single member.

An intake passage portion 10 is connected to the cylinder head 4 of the engine 1. The intake passage section 10 is arranged upward of the engine 1. The intake passage portion 10 includes an intake duct 11 connected to the cylinder head 4 and extending rearward from an upper surface 4a of the cylinder head 4, a throttle body 12 provided at a midpoint along the intake duct 11, an air cleaner (not shown) connected to the intake duct 11, etc.

The engine 1 further includes a hydraulic tensioner (hereinafter referred to simply as "tensioner") 20, as shown in FIG. 2A and FIG. 2B. The tensioner 20 is arranged in the upper portion of the cylinder body 3.

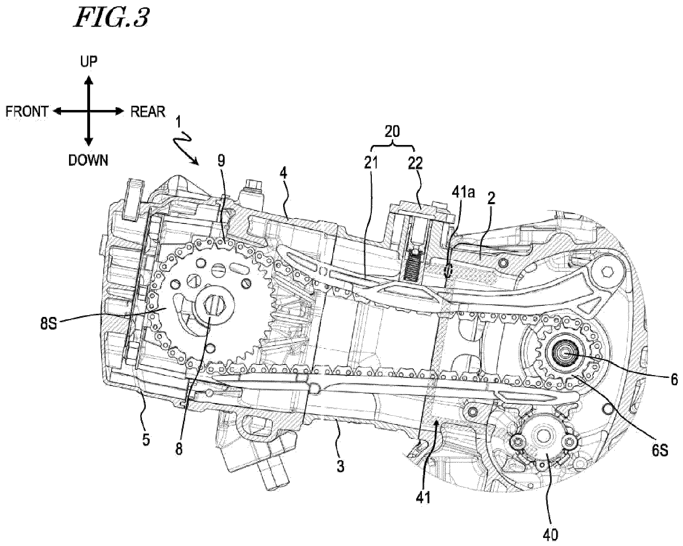

FIG. 3 is a view showing the interior of the engine 1. As shown in FIG. 3, inside the engine 1, a cam chain 9 is wound around the crank shaft 6 and a cam shaft 8 (more strictly, a chain drive sprocket 6S attached to the crank shaft 6 and a cam sprocket 8S attached to the cam shaft 8). The tensioner 20 applies tension on the cam chain 9. Note that the cam chain 9 is an example of the endless transmission member. A different endless transmission member (e.g., a cam belt) may be used instead of the cam chain 9.

The tensioner 20 includes a chain guide 21 that contacts the cam chain 9, and a tensioner lifter 22 that presses the chain guide 21 against the cam chain 9.

An oil pump 40 is arranged in the crankcase 2. The oil pump 40 is linked to and driven by the crank shaft 6. Oil is supplied to the tensioner 20 from the oil pump 40 via an oil channel 41. The oil channel 41 is formed spanning from the crankcase 2 to the cylinder body 3. Although not shown here, a cylinder gasket is arranged between the crankcase 2 and the cylinder body 3, and a portion 41a of the oil channel 41, which is located between the crankcase 2 and the cylinder body 3, passes through a through hole formed in the cylinder gasket.

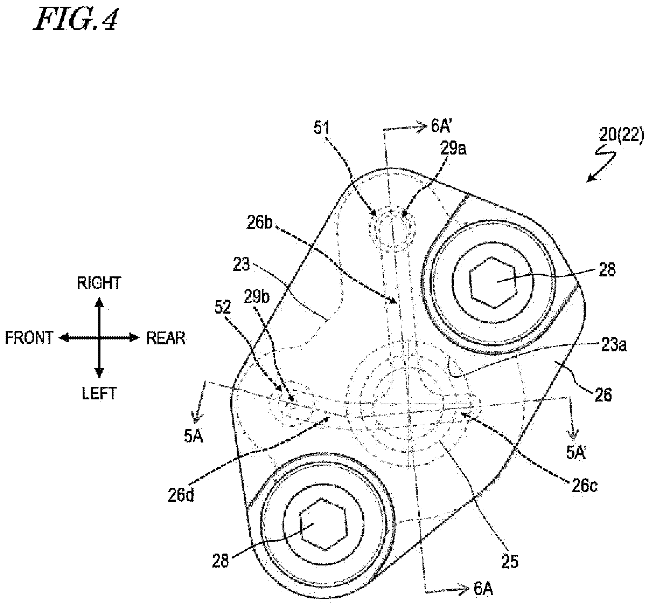

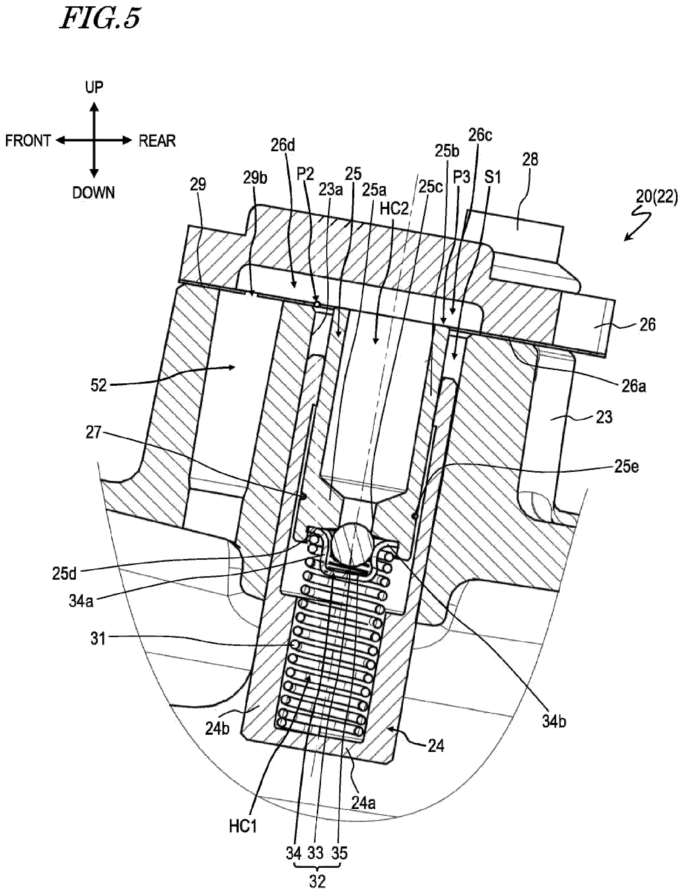

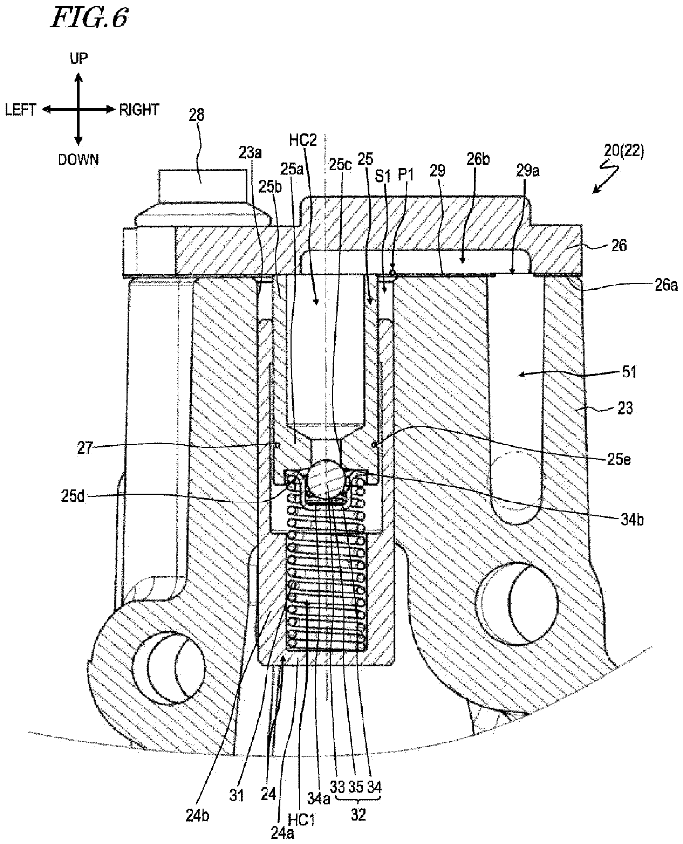

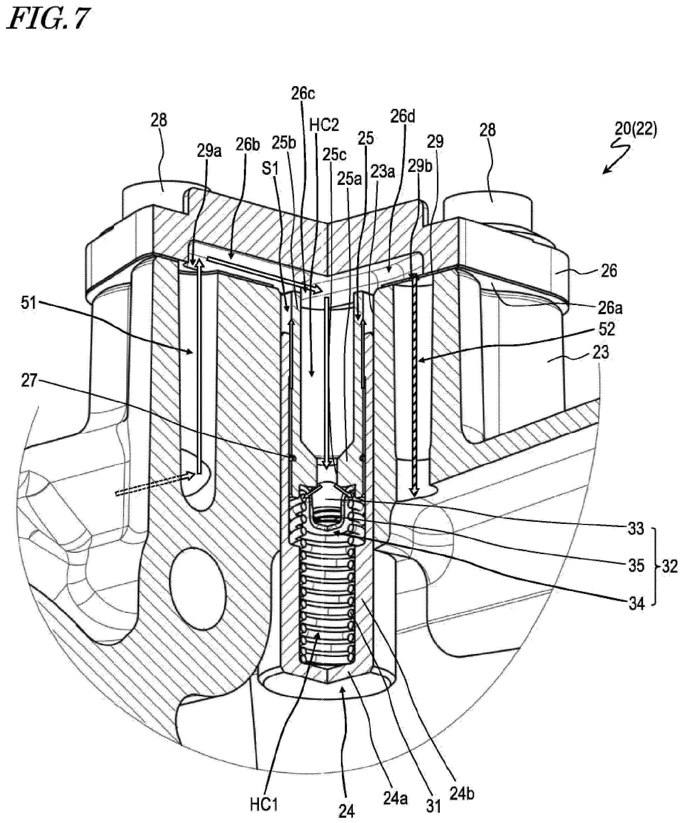

Referring to FIG. 4 to FIG. 7, the structure of the tensioner 20 will now be described more specifically. FIG. 4 is a top view schematically showing the tensioner 20. FIG. 5 and FIG. 6 are cross-sectional views schematically showing the tensioner 20, showing cross sections taken along line 5A-5A' and line 6A-6A' of FIG. 4, respectively. FIG. 7 is a perspective view schematically showing the tensioner 20, with the tensioner 20 being partially cut out. In FIG. 4 to FIG. 7, the chain guide 21 is omitted.

As shown in FIG. 4 to FIG. 7, the tensioner lifter 22 of the tensioner 20 includes a tensioner body 23, a plunger 24, an inner sleeve 25, and a tensioner cap 26.

A through hole (hereinafter referred to as the "plunger hole") 23a is formed in the tensioner body 23. The plunger hole 23a extends in a direction that is inclined slightly backward from the up-down direction (the vertical direction), as shown in FIG. 5. The lower end of the plunger hole 23a is open to the inside of the engine 1 (inside the cylinder body 3). The tensioner body 23 is formed integrally with the cylinder body 3. It can be said that a part of the cylinder body 3 functions as the tensioner body 23. Note that the tensioner body 23 may be separate from the cylinder body 3.

The plunger 24 has a cylindrical shape, i.e., a bottomed cylindrical shape (more specifically, a bottomed circular cylindrical shape), with one end closed. The plunger 24 has an end wall 24a located at the distal end portion (the lower end portion) and a peripheral wall 24b extending from the peripheral edge of the end wall 24a. The plunger 24 is inserted into the plunger hole 23a of the tensioner body 23 so that the plunger 24 is movable in the axial direction of the plunger hole 23a. The distal end portion (the end wall 24a) of the plunger 24 protrudes from the lower end of the tensioner body 23 into the cylinder body 3 (more specifically, into the cam chain chamber) and contacts the chain guide 21.

The inner sleeve 25 is a cylindrical shape (more specifically, a circular cylindrical shape). The inner sleeve 25 has an end wall 25a located at the distal end portion (lower end portion) and a peripheral wall 25b extending from the peripheral edge of the end wall 25a. A through hole (oil hole) 25c is formed in the end wall 25a. A recess 25d is formed in the lower surface of the end wall 25a. The inner sleeve 25 is inserted inside the plunger 24. An annular groove 25e is formed on the outer surface of the inner sleeve 25, and a circlip 27 is attached to the annular groove 25e.

The tensioner cap 26 is attached to one end portion (here, the upper end portion) of the tensioner body 23. In the illustrated example, the tensioner cap 26 is attached to the tensioner body 23 by a plurality of bolts 28. A lower surface 26a of the tensioner cap 26 contacts the proximal end (the upper end) of the inner sleeve 25. A tensioner gasket 29 is arranged between the tensioner cap 26 and the tensioner body 23.

The tensioner 20 has a first hydraulic chamber (high pressure chamber) HC1 and a second hydraulic chamber (low pressure chamber) HC2. The first hydraulic chamber HC1 is formed between the inner sleeve 25 and the plunger 24. The second hydraulic chamber HC2 is formed inside the inner sleeve 25. The second hydraulic chamber HC2 stores the oil to be supplied to the first hydraulic chamber HC1. The second hydraulic chamber HC2 is connected to the first hydraulic chamber HC1 via the oil hole 25c.

A coil spring 31 is arranged inside the first hydraulic chamber HC1. The coil spring 31 biases the plunger 24 toward the cam chain 9 (the endless transmission member). That is, the elastic force of the coil spring 31 presses the end wall 24a of the plunger 24 against the chain guide 21. The elastic force of the coil spring 31 also acts to press the proximal end of the inner sleeve 25 against the tensioner cap 26. Note that the coil spring 31 is an example of the biasing member. A biasing member other than the coil spring 31 may be used in place of the coil spring 31.

A check valve unit 32 is arranged between the first hydraulic chamber HC1 and the second hydraulic chamber HC2. The check valve unit 32 has the function of opening and closing the oil hole 25c to allow oil in the second hydraulic chamber HC2 to flow in one direction (from the second hydraulic chamber HC2 to the first hydraulic chamber HC1). That is, the check valve unit 32 prevents the backflow of oil from the first hydraulic chamber HC1 to the second hydraulic chamber HC2.

The check valve unit 32 includes a check valve 33, a valve seat 34, and a check spring 35.

The check valve 33 is provided so that the check valve 33 can be brought into close contact with the periphery of the lower side of the oil hole 25c. The check valve 33 is herein a ball valve.

The valve seat 34 is arranged in the recess 25d of the end wall 25a and houses the check valve 33. The valve seat 34 has a cup portion 34a formed in a cup shape and a flange portion 34b extending radially outward from the peripheral edge portion on the open side of the cup portion 34a. The cup portion 34a has a plurality of small holes (not shown) through which oil passes.

The check spring 35 is arranged in the valve seat 34 and biases the check valve 33 upward (toward the second hydraulic chamber HC2). The check spring 35 is herein a coil spring.

An oil supply hole 51 and an air vent hole 52 are formed in the tensioner body 23. The oil supply hole 51 constitutes a part of the oil channel 41 extending from the oil pump 40, through which the oil supplied to the second hydraulic chamber HC2 passes. The oil supply hole 51 includes a portion extending in the up-down direction. FIG. 7 shows, by white arrows, the flow of oil in the tensioner 20. The air vent hole 52 is a hole for venting air out of the tensioner 20, and running through the tensioner body 23 in the up-down direction. FIG. 7 shows the air flow by a hatched arrow. Note that the tensioner gasket 29 has through holes 29a and 29b that overlap the oil supply hole 51 and the air vent hole 52, respectively, in plan view as viewed from the axial direction of the plunger hole 23a. In the following description, "plan view" herein means "plan view as viewed from the axial direction of the plunger hole 23a", unless otherwise specified.

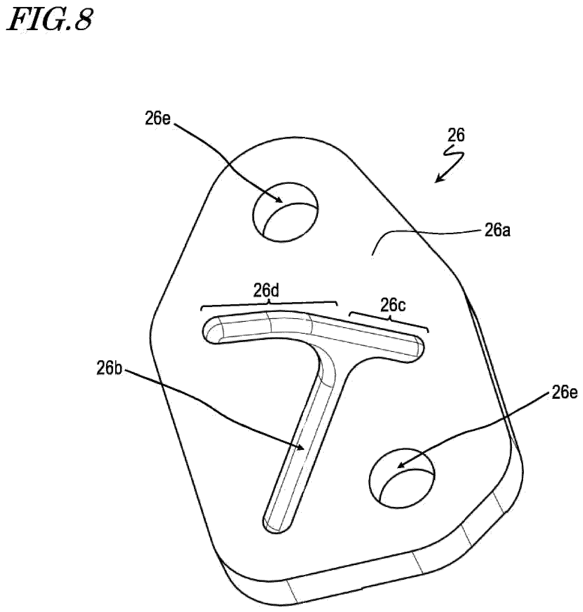

Referring also to FIG. 8, the structure of the tensioner cap 26 will now be described. FIG. 8 is a perspective view of the tensioner cap 26 as viewed from the reverse side.

The lower surface 26a of the tensioner cap 26 has a groove-shaped oil supply channel 26b. As shown in FIG. 4, etc., the oil supply channel 26b extends from the outside to the inside of the outer edge of the plunger 24 (substantially overlapping the inner surface of the plunger hole 23a) in plan view. More specifically, the oil supply channel 26b overlaps the second hydraulic chamber HC2 and the oil supply hole 51 in plan view, and connects between the second hydraulic chamber HC2 and the oil supply hole 51. The oil supply channel 26b also overlaps the space S1 enclosed by the inner surface of the plunger hole 23a, the outer surface of the inner sleeve 25, and the proximal end (the upper end) of the plunger 24. In the illustrated example, the oil supply channel 26b extends generally along the left-right direction.

The lower surface 26a of the tensioner cap 26 further has a plurality of grooves 26c and 26d. The plurality of grooves 26c and 26d each connect between the outside of the inner sleeve 25 in the radial direction and the second hydraulic chamber HC2. Note that in the illustrated example, the groove 26c and the groove 26d are continuous (the groove 26c and the groove 26d can be said to be formed as one unit and form a single groove as a whole), but the grooves 26c and 26d may be separate from each other as will be described below. In the illustrated example, the grooves 26c and 26d extend generally along the front-rear direction.

One 26c of the grooves 26c and 26d is located at a position lower than the other 26d while the engine 1 is in operation (see FIG. 5). Hereinafter, the groove 26c, which is located at a relatively low position, will also be referred to as the "first groove", and the groove 26d, which is located at a relatively high position, as the "second groove".

As already explained, the first groove 26c and the second groove 26d each connect between the outside of the inner sleeve 25 in the radial direction and the second hydraulic chamber HC2. More specifically, the first groove 26c extends so as to overlap the space S1 and the second hydraulic chamber HC2 in plan view, and connects between the space S1 and the second hydraulic chamber HC2. The second groove 26d extends so as to overlap the second hydraulic chamber HC2 and the air vent hole 52 in plan view, and connects between the second hydraulic chamber HC2 and the air vent hole 52.

Note that while the oil supply channel 26b, the first groove 26c and the second groove 26d are continuous with each other in the illustrated example, the oil supply channel 26b, the first groove 26c, and the second groove 26d may be separate from one another, as will be described below.

The tensioner cap 26 also has a plurality of bolt holes 26e. The bolts 28 are inserted into the bolt holes 26e.

The tensioner 20 having the configuration described above operates as follows.

When the engine 1 starts, the oil pump 40 is activated and the stored oil is supplied by the oil pump 40 to the tensioner 20 via the oil channel 41. Note that oil may also be supplied to other parts of the engine 1 from the oil pump 40.

As shown in FIG. 7, the oil supplied to the oil supply hole 51 of the tensioner body 23 flows through the oil supply channel 26b of the tensioner cap 26 into the second hydraulic chamber HC2. Note that the oil supplied to the oil supply hole 51 also flows into the space S1 through the oil supply channel 26b. Since the space S1 extends along the circumferential direction of the plunger hole 23a, the oil that flows into the space S1 flows into the second hydraulic chamber HC2 through the first groove 26c of the tensioner cap 26.

In the second hydraulic chamber HC2, the pressure increases due to the oil that has flowed into the second hydraulic chamber HC2, so the check valve 33 of the check valve unit 32 comes off the edge of the oil hole 25c and the oil in the second hydraulic chamber HC2 flows into the first hydraulic chamber HC1 through the oil hole 25c. As a result, the pressure in the first hydraulic chamber HC1 gradually increases. This increase in pressure and the biasing force of the coil spring 31 cause the plunger 24 to lower and press the chain guide 21 against the cam chain 9. This provides tension on the cam chain 9.

When the movement of the cam chain 9 pushes back the plunger 24 to reduce the volume of the first hydraulic chamber HC1, some oil in the first hydraulic chamber HC1 passes through the gap between the inner surface of the plunger 24 and the outer surface of the inner sleeve 25 (hereinafter referred to also as "leakage gap"), and the oil further passes through the space S1 and the gap between the outer surface of the plunger 24 and the inner surface of the plunger hole 23a to flow out into the cam chain chamber. The oil that has flowed out into the cam chain chamber falls onto the chain guide 21 and lubricates the cam chain 9, the sliding portion between the cam chain 9 and the chain guide 21, and the contact portion between the chain guide 21 and the plunger 24.

Note that when the plunger 24 is pushed back, the pressure in the first hydraulic chamber HC1 dampens the force to push back the plunger 24. Therefore, if oil is not sufficiently charged into the first hydraulic chamber HC1, the plunger 24 will be pushed back significantly and there will no longer be appropriate tension on the cam chain 9, causing noise to be generated.

If air is mixed in the oil supplied to the oil supply hole 51, the air is discharged into the cam chain chamber through the second groove 26d of the tensioner cap 26 and the air vent hole 52 of the tensioner body 23.

As mentioned above, with the tensioner 20 according to the preferred embodiment, the lower surface 26a of the tensioner cap 26 (the surface in contact with the proximal end of the inner sleeve 25) has the first groove 26c and the second groove 26d that each connect between the outside of the inner sleeve 25 in the radial direction and the second hydraulic chamber HC2, thereby separating between air venting from the second hydraulic chamber HC2, which is the internal space of the inner sleeve 25, and oil inflow into the second hydraulic chamber HC2. Therefore, it is possible to smoothly perform air venting from the second hydraulic chamber HC2 and oil filling into the second hydraulic chamber HC2.

In contrast, when only one groove is formed on the lower surface 26a of the tensioner cap 26 that connects between the outside of the inner sleeve 25 in the radial direction and the second hydraulic chamber HC2 (for example, when the first groove 26c is omitted and when the oil supply channel 26b extends to the space S1 but not to the second hydraulic chamber HC2), air venting from the second hydraulic chamber HC2 and oil inflow into the second hydraulic chamber HC2 are not separated from each other, making it difficult for air to vent from the second hydraulic chamber HC2 and the oil becomes slightly clogged and is difficult to flow into the second hydraulic chamber HC2.

According to the preferred embodiment, it is possible to desirably perform air venting from the second hydraulic chamber HC2 and oil filling into the second hydraulic chamber HC2, thereby suppressing air from being mixed into the first hydraulic chamber HC1. Therefore, it is possible to suppress the pressing force of the tensioner 20 from becoming insufficient (which may cause mechanical noise due to deteriorated behavior of the cam chain 9).

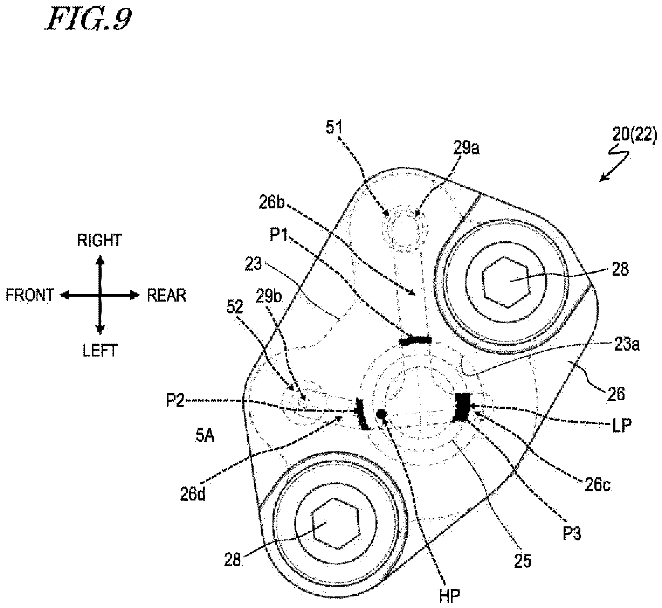

Now, referring also to FIG. 9, an example of a preferred configuration of the tensioner 20 will be described. FIG. 9 is a top view schematically showing the tensioner 20, as is FIG. 4.

The "first intersection" refers to a portion P1 on the lower surface 26a of the tensioner cap 26 where the oil supply channel 26b intersects with the projection of the outer edge of the plunger 24 onto the first surface 26a, and the "second intersection" refers to a portion P2 where the second groove 26d intersects with the projection of the outer edge of the plunger 24 onto the first surface 26a.

Then, it is preferred that a portion P3 of the proximal end of the inner sleeve 25 that overlaps the first groove 26c in plan view is located at a position lower than the first intersection P1 and the second intersection P2 while the engine 1 is in operation.

If the portion P3 of the proximal end of the inner sleeve 25 that overlaps the first groove 26c is located at a position lower than the first intersection portion P1 and the second intersection portion P2, oil that leaks out of the leak gap of the tensioner 20 (the gap between the inner surface of the plunger 24 and the outer surface of the inner sleeve 25) and accumulates on the outside of the inner sleeve 25 (the space S1) when the oil supplied by the oil pump 40 has not yet reached the vicinity of the tensioner 20, such as when restarting the engine 1, can be made to overcome the end surface of the inner sleeve 25 to be re-supplied to the inside of the inner sleeve 25 (i.e., into the second hydraulic chamber HC2), thereby suppressing air from being mixed into the first hydraulic chamber HC1. Thus, it is possible to extend the load holding time, thereby suppressing the pressing force of the tensioner from becoming insufficient such as when restarting the engine 1.

It is preferred that the second intersection P2 is located at a position higher than the first intersection P1 while the engine 1 is in operation. Thus, it is possible to even more desirably perform air venting from the second hydraulic chamber HC2.

In the illustrated example, the second groove 26d overlaps, in plan view, the highest point HP of the proximal end of the inner sleeve 25 while the engine 1 is in operation. With at least one of the plurality of grooves 26c and 26d of the tensioner cap 26 overlapping, in plan view, the highest point HP of the proximal end of the inner sleeve 25, air remaining or mixed in the second hydraulic chamber HC2 is more likely to vent spontaneously.

In the illustrated example, the first groove 26c overlaps, in plan view, the lowest point LP of the proximal end of the inner sleeve 25 while the engine 1 is in operation. With at least one of the plurality of grooves 26c and 26d of the tensioner cap 26 overlapping, in plan view, the lowest point LP of the proximal end of the inner sleeve 25, oil supplied from the outside of the inner sleeve 25 overcomes the end surface of the inner sleeve 25 even with a relatively low oil surface, and oil is more likely to flow into the second hydraulic chamber HC2.

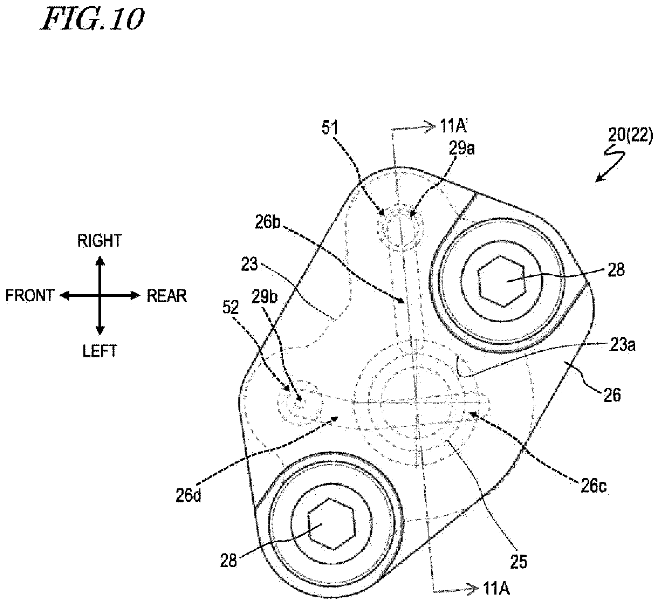

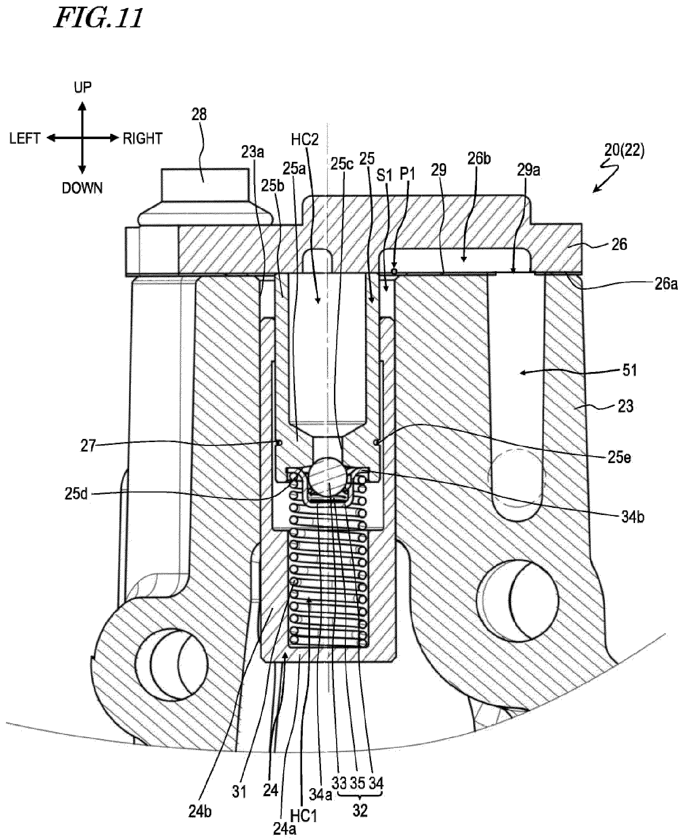

While the description above has illustrated an example in which the oil supply channel 26b is continuous with the first groove 26c and the second groove 26d, the oil supply channel 26b may be separated from the first groove 26c and the second groove 26d, as shown in FIG. 10 and FIG. 11. In the example shown in FIG. 10 and FIG. 11, the oil supply channel 26b extends from the oil supply hole 51 to the space S1 but not to the second hydraulic chamber HC2. Therefore, the oil supplied to the oil supply hole 51 does not flow directly from the oil supply channel 26b to the second hydraulic chamber HC2, but flows into the second hydraulic chamber HC2 via the space S1 and the first groove 26c.

With the oil supply channel 26b being separated from the first groove 26c and the second groove 26d, the advantage is that the oil supplied to the space S1 (outside the inner sleeve 25) and the air mixed therewith are likely to be separated. In contrast, with the oil supply channel 26b being continuous with the first groove 26c and the second groove 26d, the advantage is that the oil supplied from the oil pump 40 reaches the second hydraulic chamber HC2 more quickly when the engine 1 is restarted.

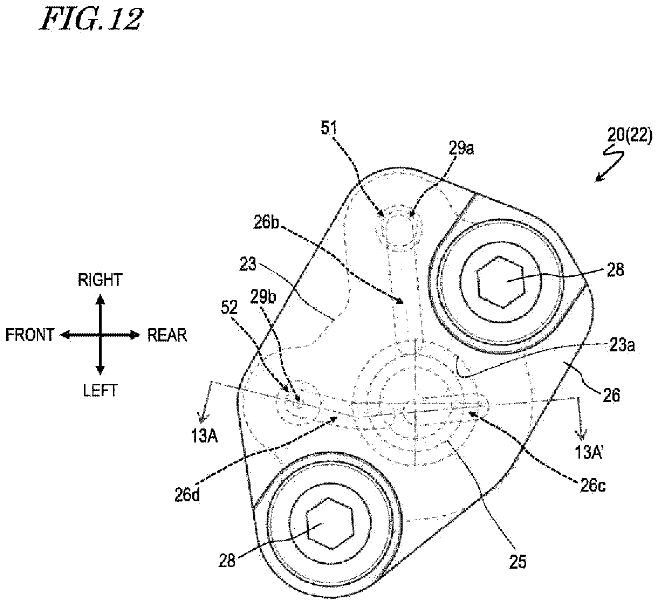

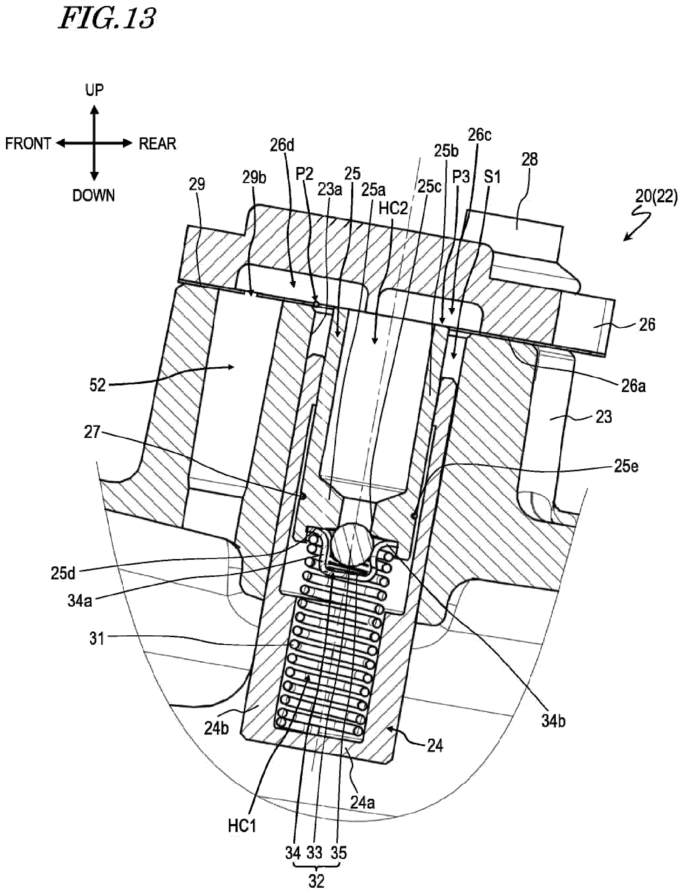

The first groove 26c and the second groove 26d may be separated from each other as shown in FIG. 12 and FIG. 13. With the first groove 26c and the second groove 26d being separated from each other, the advantage is that when the engine 1 is restarted, oil stored in the space S1 (outside the inner sleeve 25) is suppressed from passing through the upper portion of the second hydraulic chamber HC2 to be discharged directly from the air vent hole 52 of the tensioner body 23. In contrast, with the first groove 26c and the second groove 26d being continuous with each other, the advantage is that air accumulation in the discontinuity between grooves (the portion located between the first groove 26c and the second groove 26d in the example shown in FIG. 12 and FIG. 13) is eliminated, and it is possible to more smoothly supply oil to the second hydraulic chamber HC2.

Note that, in addition to the oil supply channel 26b, the first groove 26c and the second groove 26d, the lower surface 26a of the tensioner cap 26 may have a further groove that connects between the outside of the inner sleeve 25 in the radial direction and the second hydraulic chamber HC2. That is, the lower surface 26a of the tensioner cap 26 may have three or more grooves that connect between the outside of the inner sleeve 25 in the radial direction and the second hydraulic chamber HC2.

As described above, the hydraulic tensioner 20 according to the invention is the hydraulic tensioner 20 for applying tension on the endless transmission member 9 wound around the crank shaft 6 and the cam shaft 8 of the internal combustion engine 1, the hydraulic tensioner 20 including: the tensioner body 23 having the through hole 23a formed therein; the bottomed cylindrical plunger 24 movably inserted into the through hole 23a of the tensioner body 23 in the axial direction of the through hole 23a, the cylindrical inner sleeve 25 inserted inside the plunger 24; and the tensioner cap 26 attached to one end of the tensioner body 23 and having the first surface 26a in contact with the proximal end of the inner sleeve 25. The first hydraulic chamber HC1 is formed between the inner sleeve 25 and the plunger 24, and the second hydraulic chamber HC2 that stores oil to be supplied to the first hydraulic chamber HC1 is formed inside the inner sleeve 25. The first surface 26a of the tensioner cap 26 has a plurality of grooves 26c and 26d that each connect between the outside of the inner sleeve 25 in the radial direction and the second hydraulic chamber HC2.

With the hydraulic tensioner 20 according to invention the surface (the first surface) 26a of the tensioner cap 26 that contacts the proximal end of the inner sleeve 25 has a plurality of grooves 26c and 26d that each connect between the outside of the inner sleeve 25 in the radial direction and the second hydraulic chamber HC2, thereby separating between air venting from the second hydraulic chamber HC2, which is the internal space of the inner sleeve 25, and oil inflow into the second hydraulic chamber HC2. Therefore, it is possible to smoothly perform air venting from the second hydraulic chamber HC2 and oil filling into the second hydraulic chamber HC2. In contrast, if only one groove is formed on the first surface 26a of the tensioner cap 26 that connects between the outside of the inner sleeve 25 in the radial direction and the second hydraulic chamber HC2, air venting from the second hydraulic chamber HC2 and oil flow into the second hydraulic chamber HC2 are not separated, making it difficult for air to vent from the second hydraulic chamber HC2 and the oil becomes slightly clogged and is difficult to flow into the second hydraulic chamber HC2.

According to the invention it is possible to desirably air venting from the second hydraulic chamber HC2 and oil filling into the second hydraulic chamber HC2, thereby suppressing air from being mixed into the first hydraulic chamber HC1. Therefore, it is possible to suppress the pressing force of the tensioner 20 from becoming insufficient (which may cause mechanical noise due to deteriorated behavior of the cam chain 9).

In the invention, the first surface 26a of the tensioner cap 26 has the groove-shaped oil supply channel 26b extending from outside to inside of the outer edge of the plunger 24 in plan view as viewed from the axial direction. Where the first groove refers to the groove 26c of the plurality of grooves 26c and 26d that is located at a lowest position while the internal combustion engine 1 is in operation, the first intersection refers to the portion P1 on the first surface 26a where the oil supply channel 26b intersects with the projection of the outer edge of the plunger 24 onto the first surface 26a, and the second intersection refers to the portion P2 on the first surface 26a where the groove 26d of the plurality of grooves 26c and 26d other than the first groove 26c intersects with the projection of the outer edge of the plunger 24 onto the first surface 26a, the portion P3 of the proximal end of the inner sleeve 25 that overlaps the first groove 26c in plan view as viewed from the axial direction is located at a position lower than the first intersection P1 and the second intersection P2 while the internal combustion engine 1 is in operation.

Where the "first groove" refers to the groove 26c, of the plurality of grooves 26c and 26d of the tensioner cap 26, that is located at a lowest position, the "first intersection" refers to the portion P1 on the first surface 26a where the oil supply channel 26b intersects with the projection of the outer edge of the plunger 24 onto the first surface 26a, and the "second intersection" refers to the portion P2 on the first surface 26a where the groove 26d of the plurality of grooves 26c and 26d other than the first groove 26c intersects with the projection of the outer edge of the plunger 24 onto the first surface 26a, it is preferred that a portion of the proximal end of the inner sleeve 25 that overlaps the first groove 26c in plan view as viewed from the axial direction is located at a position lower than the first intersection P1 and the second intersection P2 while the internal combustion engine 1 is in operation.

Therefore, oil that leaks out of the leak gap of the tensioner 20 (the gap between the inner surface of the plunger 24 and the outer surface of the inner sleeve 25) and accumulates on the outside of the inner sleeve 25 when the oil supplied by the oil pump 40 has not yet reached the vicinity of the tensioner 20, such as when restarting the internal combustion engine 1, can be made to overcome the end surface of the inner sleeve 25 to be re-supplied to the inside of the inner sleeve 25 (i.e., into the second hydraulic chamber HC2), thereby suppressing air from being mixed into the first hydraulic chamber HC1. Thus, it is possible to extend the load holding time, thereby suppressing the pressing force of the tensioner 20 from becoming insufficient such as when restarting the internal combustion engine 1.

In the invention, the first surface 26a of the tensioner cap 26 has the groove-shaped oil supply channel 26b extending from outside to inside of the outer edge of the plunger 24 in plan view as viewed from the axial direction. Where the first groove refers to the groove 26c of the plurality of grooves 26c and 26d that is located at a lowest position while the internal combustion engine 1 is in operation, the first intersection refers to the portion P1 on the first surface 26a where the oil supply channel 26b intersects with the projection of the outer edge of the plunger 24 onto the first surface 26a, and the second intersection refers to the portion P2 on the first surface 26a where the groove 26d of the plurality of grooves 26c and 26d other than the first groove 26c intersects with the projection of the outer edge of the plunger 24 onto the first surface 26a, the second intersection P2 is located at a position higher than the first intersection P1 while the internal combustion engine 1 is in operation.

Where the "first groove" refers to the groove 26c, of the plurality of grooves 26c and 26d of the tensioner cap 26, that is located at a lowest position, the "first intersection" refers to the portion P1 on the first surface 26a where the oil supply channel 26b intersects with the projection of the outer edge of the plunger 24 onto the first surface 26a, and the "second intersection" refers to the portion P2 on the first surface 26a where the groove 26d of the plurality of grooves 26c and 26d other than the first groove 26c intersects with the projection of the outer edge of the plunger 24 onto the first surface 26a, it is preferred that the second intersection P2 is located at a position higher than the first intersection P1 while the internal combustion engine 1 is in operation. Thus, it is possible to even more desirably perform air venting from the second hydraulic chamber HC2.

In one embodiment, at least one of the plurality of grooves 26c and 26d overlaps, in plan view as viewed from the axial direction, the highest point HP of the proximal end of the inner sleeve 25 while the internal combustion engine 1 is in operation.

With at least one groove of the tensioner cap 26 overlapping, in plan view, the highest point HP of the proximal end of the inner sleeve 25, air remaining or mixed in the second hydraulic chamber HC2 is more likely to vent spontaneously.

In one embodiment, at least one of the plurality of grooves 26c and 26d overlaps, in plan view as viewed from the axial direction, the lowest point LP of the proximal end of the inner sleeve 25 while the internal combustion engine 1 is in operation.

With at least one groove of the tensioner cap 26 overlapping, in plan view, the lowest point LP of the proximal end of the inner sleeve 25, oil supplied from the outside of the inner sleeve 25 overcomes the end surface of the inner sleeve 25 even with a relatively low oil surface, and oil is more likely to flow into the second hydraulic chamber HC2.

In one embodiment, the hydraulic tensioner 20 further includes the biasing member 31 that is arranged inside the first hydraulic chamber HC1 and biases the plunger 24 toward the endless transmission member 9, and the check valve unit 32 arranged between the first hydraulic chamber HC1 and the second hydraulic chamber HC2.

In one embodiment, the first surface 26a of the tensioner cap 26 has the groove-shaped oil supply channel 26b extending from outside to inside of the outer edge of the plunger 24 in plan view as viewed from the axial direction, wherein the oil supply channel 26b and plurality of grooves 26c and 26d are continuous with each other.

With the oil supply channel 26b and the plurality of grooves 26c and 26d being continuous with each other, the advantage is that the oil supplied by the oil pump 40 reaches the second hydraulic chamber HC2 more quickly when the internal combustion engine 1 is restarted.

In one embodiment, the first surface 26a of the tensioner cap 26 has the groove-shaped oil supply channel 26b extending from outside to inside of the outer edge of the plunger 24 in plan view as viewed from the axial direction, and the oil supply channel 26b and the plurality of grooves 26c and 26d are separated from each other.

With the oil supply channel 26b and the plurality of grooves 26c and 26d being separated from each other, the advantage is that the oil supplied to the outside of the inner sleeve 25 (the space S1 enclosed by the inner surface of the plunger hole 23a, the outer surface of the inner sleeve 25 and the proximal end (the upper end) of the plunger 24) and the air mixed therewith are likely to be separated.

In one embodiment, the plurality of grooves 26c and 26d include two grooves 26c and 26d that are continuous with each other.

With the two grooves 26c and 26d being continuous with each other, the advantage is that air accumulation in the discontinuity between grooves is eliminated, and it is possible to more smoothly supply oil to the second hydraulic chamber HC2.

In one embodiment, the plurality of grooves 26c and 26d include two grooves 26c and 26d that are separated from each other.

With the two grooves 26c and 26d being separated from each other, the advantage is that when the internal combustion engine 1 is restarted, oil stored on the outside of the inner sleeve 25 (in the space S1 described above) is suppressed from passing through the upper portion of the second hydraulic chamber HC2 to be discharged directly from the air vent hole of the tensioner body 23.

The internal combustion engine 1 according to the preferred embodiment includes the hydraulic tensioner 20 having any of the configurations described above.

The straddled vehicle 100 according to the preferred embodiment includes the internal combustion engine 1 having the configuration described above.

According to the preferred embodiment, there is provided a hydraulic tensioner capable of desirably performing both air venting from the hydraulic chamber and oil filling into the hydraulic chamber. The hydraulic tensioner according to the preferred embodiment is preferably used in internal combustion engines of various straddled vehicles.

## Claims

1. A hydraulic tensioner (20) for applying tension on an endless transmission member (9) wound around a crank shaft (6) and a cam shaft (8) of an internal combustion engine (1), the hydraulic tensioner (20) comprising:
a tensioner body (23) having a through hole (23a) formed therein;
a bottomed cylindrical plunger (24) inserted into the through hole (23a) of the tensioner body (23) so that the plunger (24) is movable in an axial direction of the through hole (23a);
a cylindrical inner sleeve (25) inserted inside the plunger (24); and
a tensioner cap (26) attached to one end of the tensioner body (23), wherein
a first hydraulic chamber (HC1) is formed between the inner sleeve (25) and the plunger (24), and a second hydraulic chamber (HC2) configured to store oil to be supplied to the first hydraulic chamber (HC1) is formed inside the inner sleeve (25),
**characterized in that**
the tensioner cap (26) has a first surface (26a) in contact with a proximal end of the inner sleeve (25), the first surface (26a) of the tensioner cap (26) has a plurality of grooves (26c, 26d) that each connect between outside of the inner sleeve (25) in a radial direction of the through hole (23a) and the second hydraulic chamber (HC2), wherein the first surface (26a) of the tensioner cap (26) has a groove-shaped oil supply channel (26b) extending from outside to inside of an outer edge of the plunger (24) in plan view as viewed from the axial direction of the through hole (23a); and where:
a first groove (26c) refers to one of the plurality of grooves (26c, 26d) that is located at a lowest position while the internal combustion engine (1) is in operation;
a first intersection (P1) refers to a portion on the first surface (26a) where the oil supply channel (26b) intersects with a projection of the outer edge of the plunger (24) onto the first surface (26a); and
a second intersection (P2) refers to a portion on the first surface (26a) where one of the plurality of grooves (26c, 26d) other than the first groove (26c) intersects with the projection of the outer edge of the plunger (24) onto the first surface (26a).

2. The hydraulic tensioner (20) according to claim 1, **characterized in that** a portion of the proximal end of the inner sleeve (25) that overlaps the first groove (26c) in plan view as viewed from the axial direction of the through hole (23a)is located at a position lower than the first intersection (P1) and the second intersection (P2) while the internal combustion engine (1) is in operation.

3. The hydraulic tensioner (20) according to claim 1 or 2, **characterized in that** the second intersection (P2) is located at a position higher than the first intersection (P1) while the internal combustion engine (1) is in operation.

4. The hydraulic tensioner (20) according to any one of claims 1 to 3, **characterized in that** at least one (26d) of the plurality of grooves (26c, 26d) overlaps, in plan view as viewed from the axial direction of the through hole (23a), a highest point (HP) of the proximal end of the inner sleeve (25) while the internal combustion engine (1) is in operation.

5. The hydraulic tensioner (20) according to any one of claims 1 to 4, **characterized in that** at least one (26c) of the plurality of grooves (26c, 26d) overlaps, in plan view as viewed from the axial direction of the through hole (23a), a lowest point (LP) of the proximal end of the inner sleeve (25) while the internal combustion engine (1) is in operation.

6. The hydraulic tensioner (20) according to any one of claims 1 to 5, **characterized by**:
a biasing member (31) that is arranged inside the first hydraulic chamber (HC1) and biases the plunger (24) toward the endless transmission member (9); and
a check valve unit (32) arranged between the first hydraulic chamber (HC1) and the second hydraulic chamber (HC2).

7. The hydraulic tensioner (20) according to any one of claims 1 to 6, **characterized in that** the first surface (26a) of the tensioner cap (26) has a groove-shaped oil supply channel (26b) extending from outside to inside of the outer edge of the plunger (24) in plan view as viewed from the axial direction of the through hole (23a); and
the oil supply channel (26b) and the plurality of grooves (26c, 26d) are continuous with each other, or
the oil supply channel (26b) and the plurality of grooves (26c, 26d) are separated from each other.

8. The hydraulic tensioner (20) according to any one of claims 1 to 7, **characterized in that** the plurality of grooves (26c, 26d) include two grooves (26c, 26d) that are continuous with each other, or
the plurality of grooves (26c, 26d) include two grooves (26c, 26d) that are separated from each other.

9. An internal combustion engine (1) having an endless transmission member (9) wound around a crank shaft (6) and a cam shaft (8) and comprising the hydraulic tensioner (20) according to any one of claims 1 to 8.

10. The internal combustion engine (1) according to claim 9, further comprising a crankcase (2) supporting the crank shaft (6) and a cylinder body (3), wherein a part of the cylinder body (3) functions as the tensioner body (23).

11. A straddled vehicle comprising the internal combustion engine (1) according to claim 9 or 10.

12. The straddled vehicle according to claim 11, wherein the internal combustion engine (1) is arranged with the axial direction of the through hole (23a) in up-down direction of the straddled vehicle.

13. The straddled vehicle according to claim 11 or 12, wherein internal combustion engine (1) is arranged with the crank shaft (6) extending in left-right direction of the straddled vehicle.

14. The straddled vehicle according to any one of claims 11 to 13, wherein the cam shaft (8) is arranged forward of the crank shaft (6) with regard to a front-rear direction of the straddled vehicle.

## Patentansprüche

1. Ein hydraulischer Spanner (20) zum Aufbringen von Spannung auf ein Endlos-Übertragungselement (9), das um eine Kurbelwelle (6) und eine Nockenwelle (8) eines Verbrennungsmotors (1) gewickelt ist, wobei der hydraulische Spanner (20) umfasst:
einen Spanner-Körper (23) mit einem darin ausgebildeten Durchgangsloch (23a);
einen zylindrischen Kolben (24) mit Boden, der in das Durchgangsloch (23a) des Spannkörpers (23) eingesetzt ist, so dass der Kolben (24) in axialer Richtung des Durchgangslochs (23a) bewegbar ist;
eine zylindrische Innenhülse (25), die in den Kolben (24) eingesetzt ist; und
eine Spannerkappe (26), die an einem Ende des Spannkörpers (23) angebracht ist, wobei
eine erste Hydraulikkammer (HC1) zwischen der Innenhülse (25) und dem Kolben (24) ausgebildet ist und eine zweite Hydraulikkammer (HC2), die zum Speichern von Öl,
das der ersten Hydraulikkammer (HC1) zugeführt werden soll, konfiguriert ist, innerhalb der Innenhülse (25) ausgebildet ist, **dadurch gekennzeichnet, dass**
die Spannerkappe (26) eine erste Oberfläche (26a) aufweist, die mit einem proximalen Ende der Innenhülse (25) in Kontakt steht, die erste Oberfläche (26a) der Spannerkappe (26) eine Mehrzahl von Nuten (26c, 26d) aufweist, die jeweils zwischen der Außenseite der Innenhülse (25) in radialer Richtung der Durchgangsbohrung liegen (23a) und der zweiten Hydraulikkammer (HC2) verbunden sind, wobei die erste Oberfläche (26a) der Spannerkappe (26) einen nutförmigen Ölzufuhrkanal (26b) aufweist, der sich von der Außenseite zur Innenseite einer Außenkante des Kolbens (24) in der Draufsicht aus der axialen Richtung des Durchgangslochs (23a) erstreckt; und wobei:
eine erste Nut (26c) eine der Mehrzahl der Nuten (26c, 26d) bezeichnet, die sich an einer niedrigsten Position befindet, während der Verbrennungsmotor (1) in Betrieb ist;
eine erste Schnittstelle (P1) einen Abschnitt auf der ersten Oberfläche (26a) bezeichnet, an dem der Ölzufuhrkanal (26b) einen Vorsprung der Außenkanten des Kolbens (24) auf der ersten Oberfläche (26a) schneidet; und
ein zweiter Schnittpunkt (P2) bezieht sich auf einen Abschnitt auf der ersten Oberfläche (26a), an dem eine der Mehrzahl der Nuten (26c, 26d) außer der ersten Nut (26c) den Vorsprung der Außenkante des Kolbens (24) auf die erste Oberfläche (26a) schneidet.

2. Der hydraulische Spanner (20) gemäß Anspruch 1, **dadurch gekennzeichnet, dass** sich ein Abschnitt des proximalen Endes der Innenhülse (25), der die erste Nut (26c) in der Draufsicht aus der axialen Richtung des Durchgangslochs (23a) betrachtet überlappt, an einer Position befindet, die niedriger ist als der erste Schnittpunkt (P1) und der zweite Schnittpunkt (P2), während der Verbrennungsmotor (1) in Betrieb ist.

3. Der hydraulische Spanner (20) gemäß Anspruch 1 oder 2, **dadurch gekennzeichnet, dass** sich der zweite Schnittpunkt (P2) an einer Position befindet, die höher liegt als der erste Schnittpunkt (P1), während der Verbrennungsmotor (1) in Betrieb ist.

4. Der hydraulische Spanner (20) gemäß irgendeinem der Ansprüche 1 bis 3, **dadurch gekennzeichnet, dass** zumindest eine (26d) der Mehrzahl der Nuten (26c, 26d) in der Draufsicht, gesehen aus der axialen Richtung des Durchgangslochs (23a), einen höchsten Punkt (HP) des proximalen Endes der Innenhülse (25) überlappt, während der Verbrennungsmotor (1) in Betrieb ist.

5. Der hydraulische Spanner (20) gemäß irgendeinem der Ansprüche 1 bis 4, **dadurch gekennzeichnet, dass** zumindest eine (26c) der Mehrzahl der Nuten (26c, 26d) in der Draufsicht aus axialer Richtung des Durchgangslochs (23a) gesehen einen tiefsten Punkt (LP) des proximalen Endes der Innenhülse (25) überlappt, während der Verbrennungsmotor (1) in Betrieb ist.

6. Der hydraulische Spanner (20) gemäß irgendeinem der Ansprüche 1 bis 5,
**gekennzeichnet durch**:
ein Vorspannelement (31), das innerhalb der ersten Hydraulikkammer (HC1) angeordnet ist und den Kolben (24) in Richtung des Endlos-Übertragungselements (9) vorspannt; und
eine Rückschlagventileinheit (32), die zwischen der ersten Hydraulikkammer (HC1) und der zweiten Hydraulikkammer (HC2) angeordnet ist.

7. Der hydraulische Spanner (20) gemäß irgendeinem der Ansprüche 1 bis 6, **dadurch gekennzeichnet, dass** die erste Oberfläche (26a) der Spannerkappe (26) einen nutförmigen Ölzufuhrkanal (26b) aufweist, der sich von außen nach innen vom Außenrand des Kolbens (24) in der Draufsicht aus gesehen von der Axialrichtung des Durchgangslochs (23a) erstreckt; und
der Ölzufuhrkanal (26b) und die Mehrzahl der Nuten (26c, 26d) miteinander verbunden sind, oder
der Ölzufuhrkanal (26b) und die Mehrzahl der Nuten (26c, 26d) voneinander getrennt sind.

8. Der hydraulische Spanner (20) gemäß irgendeinem der Ansprüche 1 bis 7, **dadurch gekennzeichnet, dass** die Mehrzahl der Nuten (26c, 26d) zwei Nuten (26c, 26d) enthalten, die miteinander verbunden sind, oder
die Mehrzahl der Nuten (26c, 26d) zwei Nuten (26c, 26d) enthalten, die voneinander getrennt sind.

9. Ein Verbrennungsmotor (1) mit einem Endlos-Übertragungselement (9), das um eine Kurbelwelle (6) und eine Nockenwelle (8) gewickelt ist und den hydraulischen Spanner (20) gemäß irgendeinem der Ansprüche 1 bis 8 umfasst.

10. Der Verbrennungsmotor (1) gemäß Anspruch 9, der ferner ein Kurbelgehäuse (2), das die Kurbelwelle (6) und einen Zylinderkörper (3) trägt, umfasst, wobei ein Teil des Zylinderkörpers (3) als Spannkörper (23) fungiert.

11. Ein Spreizsitzfahrzeug, das den Verbrennungsmotor (1) gemäß Anspruch 9 oder 10 umfasst.

12. Das Spreizsitzfahrzeug gemäß Anspruch 11, wobei der Verbrennungsmotor (1) so angeordnet ist, dass die axiale Richtung des Durchgangslochs (23a) in Auf-AbRichtung des Spreizsitzfahrzeugs verläuft.

13. Das Spreizsitzfahrzeug gemäß Anspruch 11 oder 12, wobei der Verbrennungsmotor (1) so angeordnet ist, dass sich die Kurbelwelle (6) in der Links-Rechts-Richtung des Spreizsitzfahrzeugs erstreckt.

14. Das Spreizsitzfahrzeug gemäß irgendeinem der Ansprüche 11 bis 13, wobei die Nockenwelle (8) in Bezug auf die Vorder-Rück-Richtung des Spreizsitzfahrzeugs vor der Kurbelwelle (6) angeordnet ist.

## Revendications

1. Tendeur hydraulique (20) pour appliquer une tension sur un organe de transmission sans fin (9) enroulé autour d'un vilebrequin (6) et d'un arbre à cames (8) d'un moteur à combustion interne (1), le tendeur hydraulique (20) comprenant :
un corps de tendeur (23) ayant un trou traversant (23a) formé à l'intérieur ;
un piston cylindrique à fond (24) inséré dans le trou traversant (23a) du corps de tendeur (23) de sorte que le piston (24) est mobile dans une direction axiale du trou traversant (23a) ;
un manchon interne cylindrique (25) inséré à l'intérieur du piston (24) ; et
un capuchon de tendeur (26) attaché à une extrémité du corps de tendeur (23), dans lequel
une première chambre hydraulique (HC1) est formée entre le manchon interne (25) et le piston (24), et une seconde chambre hydraulique (HC2) configurée pour stocker de l'huile à fournir à la première chambre hydraulique (HC1) est formée à l'intérieur du manchon interne (25),
**caractérisé en ce que**
le capuchon de tendeur (26) a une première surface (26a) en contact avec une extrémité proximale du manchon interne (25), la première surface (26a) du capuchon de tendeur (26) a une pluralité de rainures (26c, 26d) qui se connectent chacune entre l'extérieur du manchon interne (25) dans une direction radiale du trou traversant (23a) et la seconde chambre hydraulique (HC2), dans lequel la première surface (26a) du capuchon de tendeur (26) a un canal d'alimentation en huile en forme de rainure (26b) s'étendant de l'extérieur vers l'intérieur d'un bord externe du piston (24) sur une vue de dessus comme vu depuis la direction axiale du trou traversant (23a) ; et où :
une première rainure (26c) désigne l'une de la pluralité de rainures (26c, 26d) qui est située à une position la plus basse pendant que le moteur à combustion interne (1) est en fonctionnement ;
une première intersection (P1) désigne une portion sur la première surface (26a) où le canal d'alimentation en huile (26b) entrecoupe une projection du bord externe du piston (24) sur la première surface (26a) ; et
une seconde intersection (P2) désigne une portion sur la première surface (26a) où l'une de la pluralité de rainures (26c, 26d) autre que la première rainure (26c) entrecoupe la projection du bord externe du piston (24) sur la première surface (26a).

2. Tendeur hydraulique (20) selon la revendication 1, **caractérisé en ce qu'**une portion de l'extrémité proximale du manchon interne (25) qui chevauche la première rainure (26c) sur une vue de dessus comme vu depuis la direction axiale du trou traversant (23a) est située à une position inférieure à la première intersection (P1) et à la seconde intersection (P2) pendant que le moteur à combustion interne (1) est en fonctionnement.

3. Tendeur hydraulique (20) selon la revendication 1 ou 2, **caractérisé en ce que** la seconde intersection (P2) est située à une position supérieure à la première intersection (P1) pendant que le moteur à combustion interne (1) est en fonctionnement.

4. Tendeur hydraulique (20) selon l'une quelconque des revendications 1 à 3, **caractérisé en ce qu'**au moins une (26d) de la pluralité de rainures (26c, 26d) chevauche, sur une vue de dessus comme vu depuis la direction axiale du trou traversant (23a), un point le plus haut (HP) de l'extrémité proximale du manchon interne (25) pendant que le moteur à combustion interne (1) est en fonctionnement.

5. Tendeur hydraulique (20) selon l'une quelconque des revendications 1 à 4, **caractérisé en ce qu'**au moins une (26c) de la pluralité de rainures (26c, 26d) chevauche, sur une vue de dessus comme vu depuis la direction axiale du trou traversant (23a), un point le plus bas (LP) de l'extrémité proximale du manchon interne (25) pendant que le moteur à combustion interne (1) est en fonctionnement.

6. Tendeur hydraulique (20) selon l'une quelconque des revendications 1 à 5, **caractérisé par** :
un organe de sollicitation (31) qui est agencé à l'intérieur de la première chambre hydraulique (HC1) et sollicite le piston (24) vers l'organe de transmission sans fin (9) ; et
une unité de clapet anti-retour (32) agencée entre la première chambre hydraulique (HC1) et la seconde chambre hydraulique (HC2).

7. Tendeur hydraulique (20) selon l'une quelconque des revendications 1 à 6, **caractérisé en ce que** la première surface (26a) du capuchon de tendeur (26) a un canal d'alimentation en huile en forme de rainure (26b) s'étendant de l'extérieur vers l'intérieur du bord externe du piston (24) sur une vue de dessus comme vu depuis la direction axiale du trou traversant (23a) ; et
le canal d'alimentation en huile (26b) et la pluralité de rainures (26c, 26d) sont mutuellement continus, ou
le canal d'alimentation en huile (26b) et la pluralité de rainures (26c, 26d) sont séparés les uns des autres.

8. Tendeur hydraulique (20) selon l'une quelconque des revendications 1 à 7, **caractérisé en ce que** la pluralité de rainures (26c, 26d) comportent deux rainures (26c, 26d) qui sont mutuellement continues, ou
la pluralité de rainures (26c, 26d) comportent deux rainures (26c, 26d) qui sont séparées l'une de l'autre.

9. Moteur à combustion interne (1) ayant un organe de transmission sans fin (9) enroulé autour d'un vilebrequin (6) et d'un arbre à cames (8) et comprenant le tendeur hydraulique (20) selon l'une quelconque des revendications 1 à 8.

10. Moteur à combustion interne (1) selon la revendication 9, comprenant également un carter (2) soutenant le vilebrequin (6) et un corps de cylindre (3), dans lequel une partie du corps de cylindre (3) fonctionne comme le corps de tendeur (23).

11. Véhicule à enfourcher comprenant le moteur à combustion interne (1) selon la revendication 9 ou 10.

12. véhicule à enfourcher selon la revendication 11, dans lequel le moteur à combustion interne (1) est agencé avec la direction axiale du trou traversant (23a) dans la direction haut-bas du véhicule à enfourcher.

13. véhicule à enfourcher selon la revendication 11 ou 12, dans lequel le moteur à combustion interne (1) est agencé avec le vilebrequin (6) s'étendant dans la direction gauche-droite du véhicule à enfourcher.

14. Véhicule à enfourcher selon l'une quelconque des revendications 11 à 13, dans lequel l'arbre à cames (8) est agencé en avant du vilebrequin (6) par rapport à une direction avant-arrière du véhicule à enfourcher.
